# EUROPEAN PATENT APPLICATION

(11) **EP 4 782 136 A1**
(43) Date of publication of application: **29.07.2026**
(21) Application number: 26153746.8
(22) Date of filing: 23.01.2026
(51) Int. Cl.: B23K 20/02, B23K 20/24, F28F 3/04, F28D 9/00, F28F 19/06

(54) **PRINTED CIRCUIT HEAT EXCHANGER AND METHODS OF FABRICATING SAME**

(30) Priority: 24.01.2025 US 202563833900 P; 08.01.2026 US 202619443834
(71) Applicant: GE Vernova Technology GmbH, 5400 Baden (CH)
(72) Inventor: WORKU, Michael, Greenville, 29615 (US); IMPELLIZZERI, Eric, 90000 Belfort (FR); FAQIHI, Bouria, Dubai (AE); ERICKSON, Dean M., Greenville, 29615 (US); HBAIEB, Firas, 90000 Belfort (FR)
(74) Representative: Openshaw & Co.

(57) **Abstract**

A printed circuit heat exchanger (PCHE) and methods for fabricating a PCHE for use in facilitating heat transfer includes providing a plurality of plates that each include a plurality of densely spaced channels configured to channel fluid through the PCHE. The method also includes applying a protective coating to pre-defined regions identified on at least one of the plurality of plates, wherein the protective coating facilitates extending a useful life of the PCHE, and coupling at least two of the plurality of plates together to create the PCHE.

## Description

### CROSS REFERENCE TO RELATED APPLICATIONS

This application claims the benefit of U.S. Provisional Application Serial No. 63/833,900 filed January 24, 2025, the complete disclosure of which is hereby incorporated by reference in its entirety.

### BACKGROUND OF THE INVENTION

The present disclosure relates generally to heat exchangers and, more particularly, to coatings used to facilitate extending the useful life of printed circuit heat exchangers.

Heat exchangers have long been used to transfer heat from one medium to another medium, such as liquid, gas, or air, in a manner that facilitates creating as low a pressure drop as possible within the heat exchanger. At least some known heat exchangers transfer heat between two fluids that are separated by a wall. The heating and cooling process is continuous, but over time, depending on the medium being circulated through the heat exchanger, entrained materials may create fouling, corrosion, and/or deposition along portions of at least one of the heat transfer surfaces. Such fouling, corrosion, and/or deposition may reduce the rate of heat transfer, increase pressure losses, and/or generally reduce the effectiveness of the heat exchanger and/or eventually lead to failure of the heat exchanger.

The effectiveness of known heat exchangers is at least partially dependent on the type of fluids being circulated and/or on the design of the heat exchanger. Printed circuit heat exchangers (PCHE) are designed to efficiently transfer thermal energy between two mediums while using a complex network of small fluid path defined by micro-channeled surface plates. Moreover, as compared to traditional heat exchangers, PCHE enable high heat transfer rates while using a small physical footprint. As such, the PCHE is ideal for applications that require high efficiency in space-constrained applications.

At least some known printed circuit heat exchangers are fabricated using diffusion-bonded plates. More specifically, at least some known PCHEs are fabricated by etching fluid channels into plates that are then diffusion bonded together into a stack. The diffusion bonding typically uses high temperatures in a vacuum or non-oxygen environment. Although the robust construction of some heat exchangers enables such heat exchangers to operate with higher pressures than traditional heat exchangers, the fabrication process may also create sensitized regions within portions of the plate that over time may result in corrosion and associated stress corrosion cracking. Over time, continued operation with thermal transients may lead to increased crack propagation and/or eventual failure of the heat exchanger.

Accordingly, there exists a need for a method of fabricating printed circuit heat exchangers that facilitates reducing the likelihood of PCHE failures in a cost effective and reliable manner.

### BRIEF DESCRIPTION OF THE INVENTION

In one aspect, a method of fabricating a printed circuit heat exchanger (PCHE) for use in facilitating heat transfer is provided. The method includes providing a plurality of plates that each include a plurality of densely spaced channels configured to channel fluid through the PCHE. The method also includes applying a protective coating to pre-defined regions identified on at least one of the plurality of plates, wherein the protective coating facilitates extending a useful life of the PCHE and coupling at least two of the plurality of plates together to create the PCHE.

In another aspect, a method of fabricating a printed circuit heat exchanger (PCHE) for use in facilitating heat transfer is provided. The method includes applying a protective coating to pre-defined regions on each of a plurality of plates that include channels defined thereon via a chemical etching process, and coupling at least two of the plurality of plates together via a diffusion bonding process to create the PCHE.

In yet another aspect, a printed circuit heat exchanger (PCHE) is provided. The PCHE includes a plurality of plates coupled together via a diffusion bonding process, wherein each of the plates includes a plurality of channels defined thereon via a chemical etching process, and wherein each of the plates also includes a protective coating only applied to pre-defined regions of each plate, the plates coupled together such that fluid flowing through the channels during use of the PCHE effectuates heat transfer within the PCHE.

### BRIEF DESCRIPTION OF THE DRAWINGS

FIG. 1 is a schematic view of an exemplary printed circuit heat exchanger (PCHE).
FIG. 2 is an enlarged cross-sectional illustration of a portion of a heat exchange surface that may be used within the PCHE shown in FIG. 1.
FIG. 3 is an enlarged cross-sectional illustration of the portion of the heat exchanger surface shown in FIG. 2 and coated in accordance with the invention described herein.
FIG. 4 is a flow chart illustrating an exemplary method of fabricating a PCHE heat exchanger surface.

### DETAILED DESCRIPTION OF THE INVENTION

The embodiments described herein relate to systems and methods that facilitate extending the useful life of printed circuit heat exchangers. At least some of the advantages of the systems described herein, over the prior art, include, at least: (i) providing a substantially uniform, dense, and conformal protective coating that extends across fluid channels on a heat exchanger plate; (ii) providing enhanced corrosive resistance under various operating environments; (iii) reducing stress concentrations and cracking of predefined areas extending across potential sensitized areas defined on a heat exchanger plate; and (iv) reducing the formation of localized hot spots that may develop across a heat exchanger plate during operation.

When introducing elements of various embodiments disclosed herein, the articles "a," "an," "the," and "said" are intended to mean that there are one or more of the elements. The terms "comprising," "including," and "having" are intended to be inclusive and mean that there may be additional elements other than the listed elements.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. In at least some instances, the approximating language may correspond to the precision of an instrument for measuring the value. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

All methods described herein can be performed in any suitable order unless otherwise indicated herein or otherwise clearly contradicted by context. The use of any and all examples, or exemplary language (e.g., "such as"), is intended merely to better illustrate the invention and does not pose a limitation on the scope of the invention or any embodiments unless otherwise claimed.

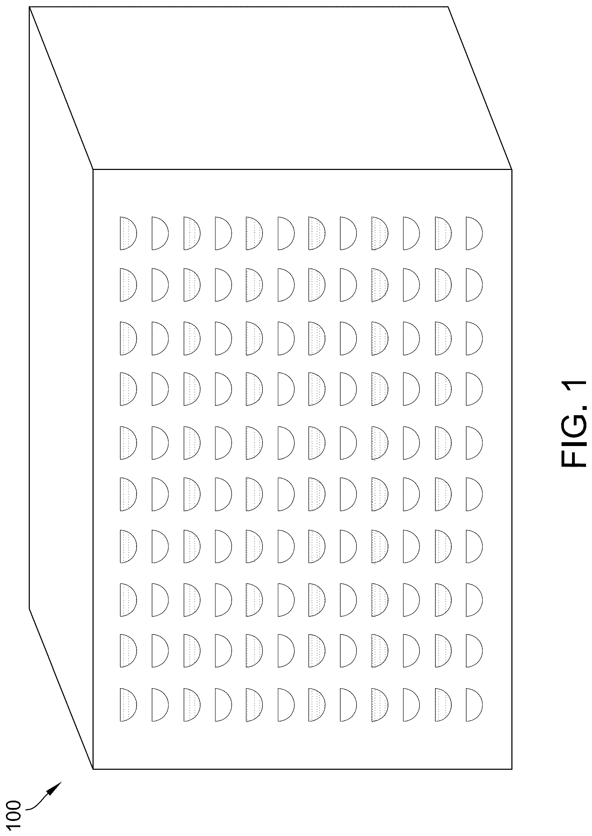

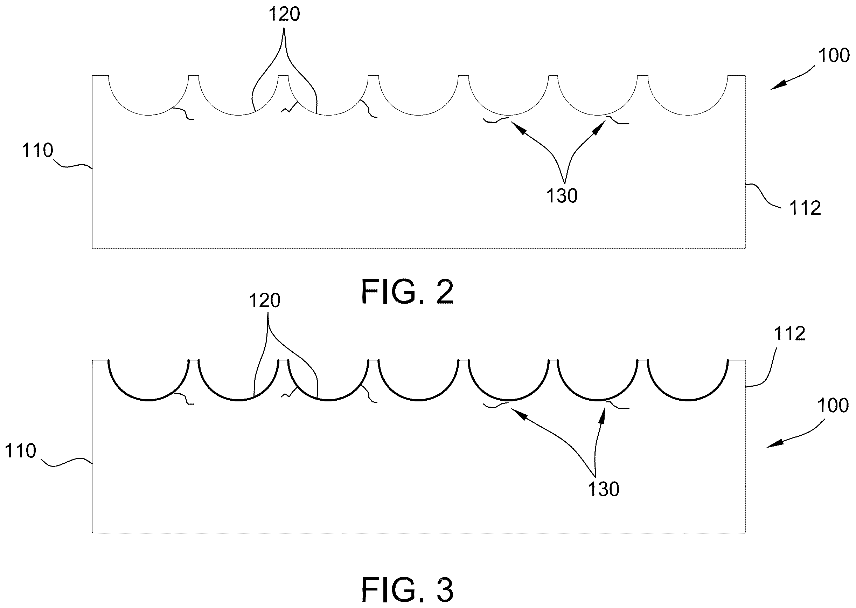

FIG. 1 is a schematic view of an exemplary printed circuit heat exchanger (PCHE) 100. FIG. 2 is an enlarged cross-sectional illustration of a portion of an exemplary heat exchange surface 110 that may be used within the PCHE 100. FIG. 3 is an enlarged cross-sectional illustration of the portion of the heat exchanger surface 110 shown in FIG. 2 and coated in accordance with the invention described herein. The heat exchanger 100 described herein utilizes a structure that includes at least two plates 112 stacked together in a dense arrangement. In one embodiment, the plates 112 are coupled together using diffusion bonding after the plates 112 have been chemically etched. The term "heat exchanger" may include any component configured to transfer as much heat as possible from one fluid to a second fluid circulated through the heat exchanger, in such a manner that pressure reductions within the heat exchanger are facilitated to be reduced. The term "fluid" as used herein refers to, but is not limited to only being, a gas, a liquid, and/or a two-phase mixture of gas and liquid. As such, although the invention is described herein in association with printed circuit heat exchangers (PCHE), it should be understood that the present invention is applicable to other configurations and designs of heat exchangers.

At least some known printed circuit heat exchangers 100 are fabricated using substantially planar metallic plates 112 that are formed with surfaces 112 that include channels 120 defined therein. When stacked and bonded together, the plates 112 form the internal core structure of the heat exchanger 100. Fluid flow channels 120, for water and/or gas, for example, are defined or printed across the plates using chemical milling or etching. More specifically, in the exemplary embodiment, the etching process produces flow channels 120 that are typically defined with a semi-circular cross-sectional profile. Moreover, the plates 110 are masked to control where the chemical etching occurs. As such, the etching enables the flow channels 120 to be oriented in intricate patterns that facilitate improving heat transfer across the plates. For example, the flow channels 120 may be sized differently within the same plate 110, may have different lengths, or may be formed in different orientations. Moreover, the etching enables the overall size of flow channels 120 to be relatively small, such that an amount of heat transfer surface area per unit volume is enhanced within the PCHE 100, as compared to traditional shell-and-tube heat exchangers. For example, in one embodiment, the flow channels are defined with a depth of between about 1 mm to about 3 mm. As a result, the PCHE 100 described herein may be fabricated with a smaller physical footprint than is possible with at least some known heat exchangers operating with approximately the same heat transfer capacity.

The etched plates 112 are then coupled together in a dense stack such that alternate spacings between adjacent plates 112 form respective hot and cold flow paths within the heat exchanger 100. Accordingly, as the colder fluid flows through some defined spacings, and hotter fluid flows through other defined spacings, heat transfer is facilitated. The etched circuits enable the PCHE 100 to be operated at higher temperatures and higher pressures as compared to at least some known heat exchangers. Moreover, the high density of flow channels facilitates enhancing the overall effectiveness of the heat exchanger 100.

Unlike at least some known heat exchangers which use welding during their fabrication process, PCHEs 100 are diffusion bonded. More specifically, during fabrication of the PCHE 100, in the exemplary embodiment, water and gas channels are etched into the plates 112 prior to the plates 112 being coupled together via diffusion bonding. During the diffusion bonding, high temperatures and high pressures are used to join the materials, i.e., the plates 112, together. For example, the temperature used to bond the plates 112 may be about 2000°F when plates 112 fabricated from stainless steel are used in the PCHE 100. Although diffusion bonding creates strong joints between the plates 112, the combination of the higher temperatures and pressures may also create sensitization areas 130 within the plates 112, and more specifically, within portions 130 of the etched channels 120. More specifically, the fabrication process, i.e., the diffusion bonding process, may produce regions 120 of cracking or pitting that may contribute to reducing the overall useful life of the PCHE 100.

During operation, over time, continued exposure to higher temperatures and pressures within the PCHE 100 may lead to stress cracking and/or thermal excursions or "hot spots" developing within the sensitized channel regions 130. For example, localized regions of the etched channels 120 may develop thermal transients, thermal excursions, and/or unstable boiling conditions, which over time may exacerbate stress corrosion cracking and/or flow instabilities in the sensitized regions 130.

To facilitate reducing the likelihood of thermal excursions, stress cracking, and/or hot spots from developing and/or limiting the useful life of the PCHE 100, in the exemplary embodiment, a protective coating 150 is applied to pre-defined and/or identified sensitized areas 130 following the chemical etching process. More specifically, in the exemplary embodiment, a protective corrosion-resistant coating 150 is applied to the unmasked areas, i.e., the sensitized regions, of each plate 112 after each plate 112 has completed the chemical etching process. In one embodiment, the unmasked areas may include both sensitized and unsensitized regions. The coating 150 may be applied to the plates 112 using any known coating methodology including, but not limited to, using a physical vapor deposition (PVD) and/or a cathodic arc evaporation process, a liquid metal coating process, a chemical vapor deposition (CVD) process, an electroplating process, and/or via an electroless deposition process. More generally, any coating application process that enables the coating 150 to be applied substantially uniformly across the plates 112 within the sensitized areas 130 may be used. In one embodiment, the coating is applied in a substantially thin layer, such as in a layer that is less than about0.1-50 micrometers thick. In one embodiment, all of the plates 112 bonded together include at least some coating 150. In another embodiment, the coating 150 extends across substantially all the plate 150.

The coating is fabricated from any material that facilitates inhibiting corrosion of any pre-existing cracking within the plates 112 that may have been formed during the fabrication process. In fact, in some embodiments, the coating substantially prevents any additional damage, including stress corrosion cracking, from occurring within the sensitized areas during use of the PCHE. In some embodiments, when cured, the coating material forms a thin film of material that substantially conforms and adheres to the plates 112, and that extends through and across the unmasked areas of the plates 112. For example, in one embodiment, the coating may be at least one of, but is not limited to only being, a titanium (Ti) coating, a nickel coating (Ni), a chromium coating, and/or any combination of those coating materials. In another embodiment, the coating may include iron and at least one additional element, such as, but not limited to, carbon (C), silicon (Si), Manganese (Mn), nitrogen (N), phosphorous P, sulfur (S), and/or combinations thereof.

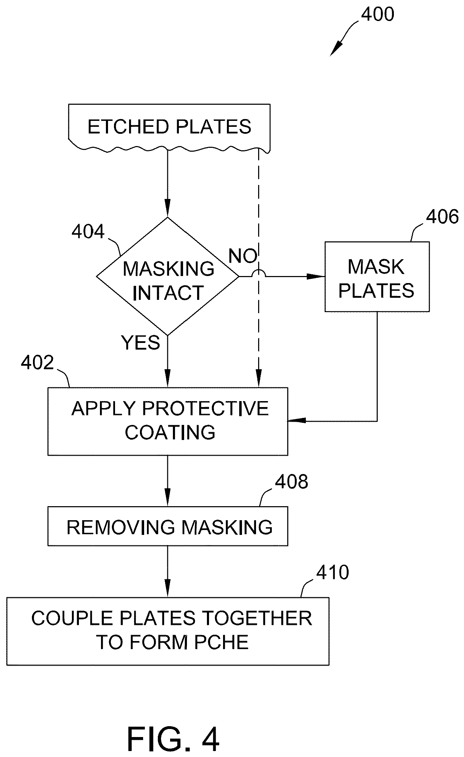

FIG. 4 is a flow chart illustrating an exemplary method 400 of fabricating a PCHE heat exchanger surface. To facilitate reducing the possible effects of sensitized areas that may have developed during the manufacturing process, a substantially uniform coating is applied 402 across defined or identified sensitized areas of the etched plates. In the exemplary embodiment, the coating 402 is applied to all chemically etched surfaces on each plate. More specifically, in some embodiments, after each plate is chemically etched to form channels extending at least partially across the plate, each of the PCHE plates is inspected 404 to determine if the masking applied during the etching process is intact. If the masking appears intact following the etching process, the plates when dried are ready to be coated 402. However, if the masking was inadvertently damaged or removed following the etching process, such as may occur during handling of the plates, those PCHE plates require masking 406 prior to the protective coating being applied 402 to ensure that only the sensitized areas of the plate remain unmasked.

In the exemplary embodiment, a protective corrosion-resistant coating is applied to 402 the unmasked areas, i.e., the sensitized regions, of each plate. The coating may be applied 402 using any known coating methodology including, but not limited to, using a physical vapor deposition (PVD) process, a liquid metal coating process, a chemical vapor deposition (CVD) process, an electroplating process, and/or via an electroless deposition process. Any coating application process that enables the coating to be applied 402 with a substantially uniform thickness to the sensitized areas may be used. Moreover, any coating material that produces thin films of coating, with high adhesion, and in a manner that facilitates extending the useful life of the PCHE plates, as described herein, may be used. For example, in the exemplary embodiment, the coating may be at least one of, but is not limited to only being, a titanium (Ti) coating, a nickel coating (Ni), a chromium coating, and/or any combination of those coating materials. Following the coating application, the masking is removed 408, and the plates are coupled together 410 via a diffusion bonding process.

During use, the coating facilitates enhancing performance and extending the useful life of the associated PCHE. Moreover, the coating facilitates reducing thermal transients that may otherwise occur, while also preventing corrosion-related failures of the PCHE plates. Furthermore, the coating facilitates inhibiting stress corrosion cracking of the PCHE plates. In addition, empirical testing has demonstrated that the coating facilitates improving the heat transfer coefficient of chemically etched PCHE plates. Additionally, in some embodiments, controlled surface features may be formed via the coating to facilitate inducing additional turbulence at the wall boundary of each channel. As a result, PCHE failure rates are facilitated to be reduced, thus extending the useful life of the PCHE.

The methods described herein enable the useful life of an associated PCHE to be extended, thereby reducing the likelihood of PCHE failures. In some instances, the methods provide a coating that substantially reduces, if not eliminates, the likelihood of sensitized areas of the PCHE plates from failing during PCHE operation. The coating, when applied as described herein, facilitates inhibiting corrosion and stress corrosion cracking within the PCHE.

The above description is meant to be exemplary only, and one skilled in the art will recognize that changes may be made to the embodiments described without departing from the scope of the invention disclosed. Modifications, which fall within the scope of the present invention, will be apparent to those skilled in the art, in light of a review of this disclosure, and such modifications are intended to fall within the appended claims. The systems described herein are not limited to the specific embodiments described herein, but rather portions of the various systems may be utilized independently and separately from other systems described herein.

Although specific features of various embodiments of the invention may be shown in some drawings and not in others, this is for convenience only. Moreover, references to "one embodiment" in the above description are not intended to be interpreted as excluding the existence of additional embodiments that also incorporate the recited features. In accordance with the principles of the invention, any feature of a drawing may be referenced and/or claimed in combination with any feature of any other drawing.

Exemplary embodiments of fabricating plates for use with printed circuit heat exchangers are described above in detail. The systems and methods described herein are not limited to the specific embodiments described herein, but rather, portions of the fabrication methods may be utilized independently and separately from other portions of the fabrication methods described herein. For example, the methods described herein are not limited to practice only with printed circuit heat exchangers as described herein. Rather, the exemplary embodiment can be implemented and utilized in connection with any heat exchanger that uses components that may include sensitized areas created during fabrication.

Further aspects of the invention are provided by the subject matter of the following clauses:
1. According to a first aspect, a method of fabricating a printed circuit heat exchanger (PCHE) for use in facilitating heat transfer is provided, wherein the method comprises: providing a plurality of plates that each include a plurality of densely spaced channels configured to channel fluid through the PCHE; applying a protective coating to pre-defined regions identified on at least one of the plurality of plates, wherein the protective coating facilitates extending a useful life of the PCHE; and coupling at least two of the plurality of plates together to create the PCHE.
2. The method according to Clause 1 further comprising inspecting each of the plurality of plates to determine if masking applied for use in creating the channels remains intact after the channels have been defined.
3. The method according to any preceding clause further comprising masking at least one of the plurality of plates identified as having one of missing masking and damaged masking after the channels have been defined.
4. The method according to any preceding clause further wherein applying a protective coating further comprises applying the coating such that a thin film of coating extends only across the pre-defined regions of each of the plurality of plates coated.
5. The method according to any preceding clause further comprising wherein applying a protective coating further comprises applying the coating using at least one of a physical vapor deposition (PVD) process, a liquid metal coating process, a chemical vapor deposition (CVD) process, an electroplating process, and an electroless deposition process.
6. The method according to any preceding clause wherein applying a protective coating further comprises applying a coating comprising at least one of titanium, nickel, and chromium.
7. The method according to any preceding clause wherein applying a protective coating further comprises applying a coating comprising at least one of iron and at least one of carbon, silicon, manganese, nitrogen, phosphorous, and sulfur.
8. The method according to any preceding clause wherein applying a protective coating to pre-defined regions further comprises applying the protective coating to at least one of the plurality of plates after the plate has been chemically etched.
9. The method according to any preceding clause wherein applying a protective coating to pre-defined regions identified on at least one of the plurality of plates, wherein the protective coating facilitates extending a useful life of the PCHE.
10. The method according to any preceding clause wherein coupling at least two of the plurality of plates together further comprises using diffusion bonding to coupled the plurality of plates together.
11. The method according to any preceding clause wherein coupling at least two of the plurality of plates together further comprises removing masking from each of the plates prior to coupling the plates together.
12. In another aspect, a method of fabricating a printed circuit heat exchanger (PCHE) for use in facilitating heat transfer is provided, wherein the method includes applying a protective coating to pre-defined regions on each of a plurality of plates that include channels defined thereon via a chemical etching process; and coupling at least two of the plurality of plates together via a diffusion bonding process to create the PCHE.
13. The method according to Clause 11 wherein applying a protective coating further comprises applying a corrosion resistant coating across the pre-defined regions on the plates.
14. The method according to any preceding clause wherein applying a protective coating further comprises applying a coating comprising at least one of titanium, nickel, and chromium.
15. The method according to any preceding clause wherein applying a protective coating further comprises applying a coating comprising at least one of iron and at least one of carbon, silicon, manganese, nitrogen, phosphorous, and sulfur.
14. The method according to any preceding clause wherein applying a protective coating further comprises applying the coating across each plate with a thickness of between about .1 to about 50 micrometers.
15. The method according to any preceding clause wherein applying a protective coating further comprises using at least one of a physical vapor deposition (PVD) process, a liquid metal coating process, a chemical vapor deposition (CVD) process, an electroplating process, and an electroless deposition process to apply the coating.
16. The method according to any preceding clause wherein applying a protective coating further comprises ensuring each plate to be coated is masked to ensure that the coating is only applied to the pre-defined regions of the plates.
17. In yet another aspect, a printed circuit heat exchanger (PCHE) is provided that comprises a plurality of plates coupled together via a diffusion bonding process, wherein each of the plates includes a plurality of channels defined thereon via a chemical etching process, and wherein each of the plates also includes a protective coating only applied to pre-defined regions of each plate, the plates coupled together such that fluid flowing through the channels during use of the PCHE effectuates heat transfer within the PCHE.

While the invention has been described in terms of various specific embodiments, those skilled in the art will recognize that the invention can be practiced with modification within the spirit and scope of the claims.

## Claims

1. A method of fabricating a printed circuit heat exchanger (PCHE) for use in facilitating heat transfer, said method comprising:
providing a plurality of plates that each include a plurality of densely spaced channels configured to channel fluid through the PCHE;
applying a protective coating to pre-defined regions identified on at least one of the plurality of plates, wherein the protective coating facilitates extending a useful life of the PCHE; and
coupling at least two of the plurality of plates together to create the PCHE.

2. The method in accordance with Claim 1 further comprising inspecting each of the plurality of plates to determine if masking applied for use in creating the channels remains intact after the channels have been defined.

3. The method in accordance with Claim 2 further comprising masking at least one of the plurality of plates identified as having one of missing masking and damaged masking after the channels have been defined.

4. The method in accordance with Claim 1 wherein applying a protective coating further comprises applying the coating such that a thin film of coating extends only across the predefined regions of each of the plurality of plates coated.

5. The method in accordance with Claim 1 wherein applying a protective coating further comprises applying the coating using at least one of a physical vapor deposition (PVD) process, a liquid metal coating process, a chemical vapor deposition (CVD) process, an electroplating process, and an electroless deposition process.

6. The method in accordance with Claim 1 wherein applying a protective coating further comprises applying a coating comprising at least one of titanium, nickel, and chromium.

7. The method in accordance with Claim 1 wherein applying a protective coating to pre-defined regions further comprises applying the protective coating to at least one of the plurality of plates after the plate has been chemically etched.

8. The method in accordance with Claim 1, wherein applying a protective coating to pre-defined regions identified on at least one of the plurality of plates comprises applying a protective coating to pre-defined regions identified on each of the plurality of plates, wherein the protective coating on each of the plurality of plates facilitates extending a useful life of the PCHE.

9. The method in accordance with Claim 1 wherein coupling at least two of the plurality of plates together further comprises using diffusion bonding to couple the plurality of plates together.

10. The method in accordance with Claim 9 wherein coupling at least two of the plurality of plates together further comprises removing masking from each of the plates prior to coupling the plates together.

11. The method according to Claim 1 wherein applying a protective coating further comprises applying a coating comprising at least one of iron and at least one of carbon, silicon, manganese, nitrogen, phosphorous, and sulfur.

12. A printed circuit heat exchanger (PCHE) comprising:
a plurality of plates coupled together via a diffusion bonding process, wherein each of the plates includes a plurality of channels defined thereon via a chemical etching process, and wherein each of the plates also includes a protective coating only applied to pre-defined regions of each plate, the plates coupled together such that fluid flowing through the channels during use of the PCHE effectuates heat transfer within the PCHE.
